# EUROPEAN PATENT APPLICATION

(11) **EP 2 020 661 A1**
(43) Date of publication of application: **04.02.2009**
(21) Application number: 08012264.1
(22) Date of filing: 08.07.2008
(51) Int. Cl.: G21C 7/10, G21C 7/103, G21C 7/117

(54) **Nuclear reactor control rod**

(30) Priority: 30.07.2007 US 830173
(71) Applicant: Westinghouse Electric Company LLC, Monroeville, PA 15146-2866 (US)
(72) Inventor: Burger, Joseph M., Broad Brook Connecticut 06016 (US); Smith, George P., Westfield Massachusetts (US)
(74) Representative: Gallo, Wolfgang

(57) **Abstract**

A control rod for nuclear reactor having a lower section that contains an annular neutron absorber wrapped in a metal sleeve. The sleeve rests on a lower spacer which is seated on the control rod lower end cap. The upper portion of the sleeve extends above the annular neutron absorber of this lower section and is capped by an upper spacer. The standard neutron absorber is supported above this upper spacer which rests on the upper end of the metal sleeve to define a gap between the upper spacer and the annular neutron absorber to accommodate axial expansion.

## Description

### BACKGROUND OF THE INVENTION

### Field of the Invention

The present invention relates generally to control rod assemblies for nuclear reactors and, more particularly, is concerned with an improvement to substantially reduce or eliminate mushrooming of the absorber material in the lower portion of the control rod.

### Description of Related Art

In a typical nuclear reactor, the reactor core includes a large number of fuel assemblies, each of which is composed of top and bottom nozzles with a plurality of elongated, transversely spaced guide thimbles extending longitudinally between the nozzles and a plurality of transverse support grids axially spaced along and attached to the guide thimbles. Also, each fuel assembly is composed of a plurality of elongated fuel elements or rods transversely spaced apart from one another and from the guide thimbles and supported by the transverse grids between the top and bottom nozzles. The fuel rods each contain fissile material and are grouped together in an array which is organized so as to provide a neutron flux in the core sufficient to support a high rate of nuclear fission, and thus the release of a large amount of energy in the form of heat. A liquid coolant is pumped upwardly through the core in order to extract some of the heat generated in the core for the production of useful work. Since the rate of heat generation in the reactor core is proportional to the nuclear fission rate, and this, in turn, is determined by the neutron flux in the core, control of heat generation at reactor start up, during operation, and at shut down is achieved by varying the neutron flux. Generally, this is done by absorbing excess neutrons using control rods which contain neutron absorbing material. The guide thimbles, in addition to being structural elements of the fuel assembly, also provide channels for insertion of the neutron absorber control rods within the reactor core. The level of neutron flux, and thus the heat output of the core, is normally regulated by the movement of the control rods into and from the guide thimbles.

One common arrangement utilizing control rods in association with the fuel assembly can be seen in U.S. Patent No. 4,326,919 to Hill and assigned to the assignee of the present invention. This patent shows an array of control rods supported at their upper ends by a spider assembly, which in turn is connected to a control rod drive mechanism that incrementally, vertically raises and lowers (referred to as a stepping action) the control rods into and out of the hollow guide thimbles of the fuel assembly. The typical construction of the control rod used in such an arrangement is in the form of an elongated metallic cladding tube having a neutron absorbing material disposed within the tube and with end plugs at opposite ends thereof for sealing the absorbent material within the tube. Generally, the neutron absorbing material is in the form of a stack of closely-packed ceramic or metallic pellets which only partially fill the tube, leaving a void space or axial gap between the top of the pellets and the upper end plug which defines a plenum chamber for receiving gases during the control operation. A coil spring is disposed within this plenum chamber and held in a state of compression between the upper end plug and the top pellet so as to maintain the stack of pellets in their closely-packed arrangement during stepping of the control rods.

Thus, control rods affect reactivity by changing direct neutron absorption. Control rods are used for fast reactivity control. A chemical shim, such as boric acid, is dissolved in the coolant to control long-term reactivity changes. More uniformly distributed throughout the core, the boron solution leads to a more uniform power distribution and fuel depletion than do control rods. The concentration of boron is normally decreased with core age to compensate for fuel depletion and fission product build up. The build up of fission products, such as xenon-135, reduces reactivity by parasitically absorbing neutrons, thereby decreasing thermal utilization. The xenon-135 (hereinafter referred to as just "xenon") is removed by neutron absorption, or by decay. Upon a reduction in core power (such as during load follow, which is a reduction in reactor power in response to a reduction in power demand) fewer thermal neutrons are available to remove the xenon. Therefore, the concentration of xenon in the core increases.

This increase in xenon concentration which accompanies a reduction in core reactivity is usually compensated for by either decreasing the concentration of boron dissolved in the core coolant or by withdrawing the control rods from the core. However, both of these methods have drawbacks. Changing the boron concentration requires the processing of coolant, i.e., water, which is difficult and not desired by the utility, especially towards the end of core life. Removal of control rods means that the core's return to power capability is reduced and peaking factors are increased.

The usual solution to this problem is to have several banks of reduced reactivity worth rods, known as gray rods, in the core at full power and which are available for removal at reduced power to compensate for xenon build up. In an advanced passive nuclear plant, known as the AP 1000 reactor, designed by the assignee of this invention, gray rods with a relatively low reactivity worth will be used to compensate for gross changes in core reactivity during steady state and load follow operations. This operational strategy will result in gray control rods constantly being cycled in and out of the core, both at full power steady state and reduced power transient conditions. At the same time, the normal control rods will normally remain out of the core and mostly be used for normal start up, shut down and trip conditions.

The control rods use state of the art neutron absorbers made from solid or hollow silver-indium-cadmium (AIC) rods enclosed in thin-walled steel cladding. AIC is relatively soft or malleable compared to stainless steel or high nickel alloys used for cladding. Under radiation, the AIC swells. A radial gap and/or a hole is generally provided to accept the swelling. However, inertial loads due to the cyclic stepping action of the rod control cluster assembly drive mechanism can produce "mushrooming" of the bottom of the AIC column, which could consume the space initially provided to accommodate swelling. Mushrooming and swelling are most pronounced at the tip of the control rod, approximately the first foot. That is because the first foot of the absorber material bears the full weight of the absorber rod against the end plug and receives the most exposure to radiation. Since the control rods are above the core most of the time, the remainder of the absorber material above the first foot is relatively shielded from neutron exposure. While these physical changes to the absorber would be of no consequence to its nuclear performance, the surrounding cladding can become strained to the point of cracking, particularly because irradiation embrittlement at the tip of the cladding is most severe. This swelling can affect the ability of the control rod to be fully inserted within the core or withdrawn. That is an even greater concern for guide thimbles that employ a dashpot in their lower end. The dashpot is a reduced diameter section in approximately the lowermost two foot portion of a fuel assembly guide thimble that functions to decelerate the descent of the control rods when they are dropped into the core during a trip to cushion the impact of the spider on the top nozzle.

Accordingly, an improved absorber tip arrangement is desired that will enable the control rod cladding to operate safely, i.e., maintain strain within the elastic region, over an extended duty cycle.

### SUMMARY OF THE INVENTION

The foregoing objective is achieved by an improved absorber tip arrangement that will permit the cladding to operate safely over an extended period. The invention employs a thin metal sleeve surrounding the absorber tip region, spacer disks above and below the sleeve that seat squarely on the edges of the sleeve, and a central hole or other void in the AIC material. The sleeve/spacer combination is sized slightly longer than the AIC as needed to allow for differential expansion between the AIC and the sleeve in the axial direction. The primary function of the sleeve, spacers and gap between the upper spacer and the AIC absorber material is to isolate the absorber tip from the inertial stepping loads that result from the 12-14 ft. long absorber stack above the upper spacer. The load is carried axially into the bottom end plug by the spacer sleeve combination, thereby bypassing the absorber tip and preventing mushrooming. Spacer height is minimized so its effect on rod worth is insignificant. Additionally, the spacers may be mechanically attached to the sleeves or otherwise held in position to facilitate loading into the control rod cladding during manufacture.

In another embodiment, a tandem arrangement of sleeves is provided with spacers on either side to further isolate the tip portion.

### BRIEF DESCRIPTION OF THE DRAWINGS

A further understanding of the invention can be gained from the following description of the preferred embodiments when read in conjunction with the accompanying drawings in which:

Fig. 1 is an elevational view of a fuel assembly, illustrated in vertically shortened form, and a control assembly, partially shown in hidden line drawing;

Fig. 2A is a partially sectioned elevational view of the control assembly of Fig. 1, which has been removed from the fuel assembly;

Fig. 2B is a top plan view of the control rod spider assembly for the control assembly of Fig. 2A;

Fig. 3 is a side view of a lower portion of a control rod, partially in section;

Fig. 4 is a side view of another embodiment of a control rod incorporating this invention, partially in section; and

Figure 4A is a partial side view showing an alternate arrangement for the spacer 52.

### DESCRIPTION OF THE PREFERRED EMBODIMENTS

For simplicity, this invention will be described with reference to a pressurized water reactor core design which is commercially known under the designation AP1000. The AP1000 reactor is a Westinghouse Electric Company LLC design. Westinghouse Electric Company LLC has its corporate offices in the greater Pittsburgh, Pennsylvania area. Reference to the AP1000 reactor design is provided for illustrative example purposes only and is not meant to be limiting upon the scope of the invention. It should, therefore, be appreciated that the exemplary control rod control assembly design of this preferred embodiment of the invention has application to a wide variety of other reactor designs.

Directional phrases used herein, such as, for example, upper, lower, top, bottom, left, right, and derivatives thereof for the most part relate to the orientation of the elements shown in the drawings and are not meant to be limiting upon the claims, unless expressly recited therein.

As employed herein, the statement that two or more parts are "coupled" together shall mean that the parts are joined together, either directly or joined through one or more intermediate parts.

As employed herein, the term "number" shall refer to one and more than one, *i*.*e*., a plurality.

### Fuel Assembly

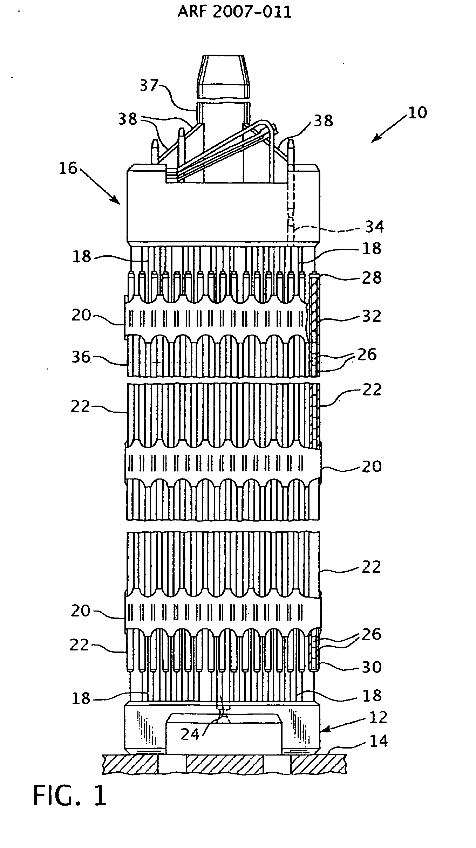

Referring now to the drawings, and particularly to Fig. 1, there is shown an elevational view of a nuclear reactor fuel assembly, represented in vertically shortened form and being generally designated by reference character 10. The fuel assembly 10 is the type used in a pressurized water reactor and has a structural skeleton which, at its lower end, includes a bottom nozzle 12 for supporting the fuel assembly 10 on a lower core support plate 14 in the core region of the nuclear reactor (not shown), a top nozzle 16 at its upper end, and a number of guide tubes or thimbles 18 which extend longitudinally between and are rigidly coupled at opposite ends to the bottom and top nozzles 12 and 16.

The fuel assembly 10 further includes a plurality of transverse grids 20 axially spaced along and mounted to the guide thimble tubes 18 and an organized array of elongated fuel rods 22 transversely spaced and supported by the grids 20. The assembly 10 also has an instrumentation tube 24 located in the center thereof and extending between and mounted to the bottom and top nozzles 12 and 16. In view of the foregoing arrangement of parts, it should be understood that the fuel assembly 10 forms an integral unit capable of being conveniently handled without damaging the assembly of parts.

As previously discussed, the array of fuel rods 22 in the fuel assembly 10 are held in spaced relationship with one another by the grids 20 which are spaced along the fuel assembly length. Each fuel rod 22 includes nuclear fuel pellets 26 and is closed at its opposite ends by upper and lower end plugs 28 and 30. The pellets 26 are maintained in a stack by a plenum spring 32 disposed between the upper end plug 28 and the top of the pellet stack. The fuel pellets 26, composed of fissile material, are responsible for creating the reactive power of the reactor. A liquid moderator/coolant such as water, or water containing boron, is pumped upwardly through a plurality of flow openings in the lower core plate 14 to the fuel assembly. The bottom nozzle 12 of the fuel assembly 10 passes the coolant upwardly through the guide tubes 18 and along the fuel rods 22 of the assembly, in order to extract heat generated therein for the production of useful work. To control the fission process, a number of control rods 34 are reciprocally movable in the guide thimbles 18 located at predetermined positions in the fuel assembly 10. A spider assembly 39 positioned above the top nozzle 16 supports the control rods 34.

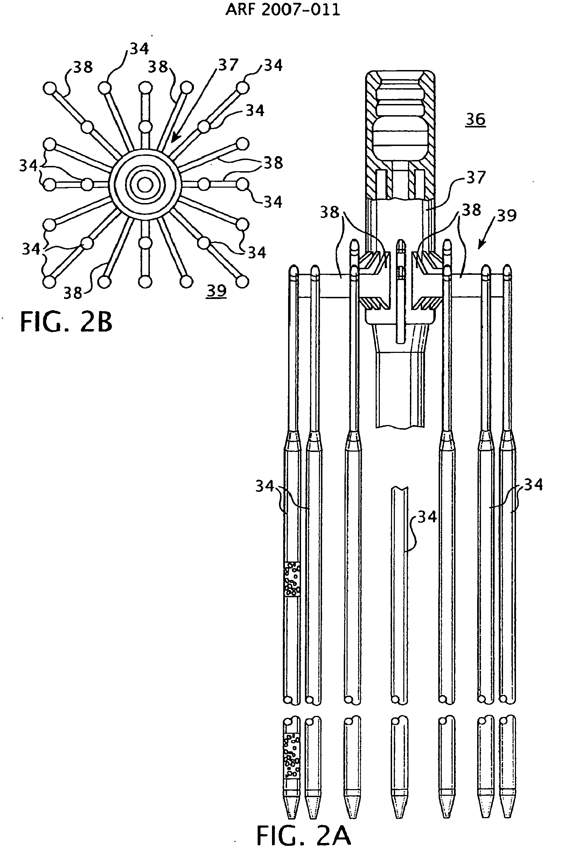

Figs. 2A and 2B show the control rod assembly 36 after it has been removed from the fuel assembly 10 of Fig. 1. Generally, the control rod assembly 36 has an internally threaded cylindrical member 37 with a plurality of radially extending flukes or arms 38 which comprise the spider assembly 39, best shown in Fig. 2B. Each arm 38 is interconnected to the control rods 34 such that the control rod assembly 36 is operable to move the control rods 34 vertically within the guide thimbles 18 (Fig. 1) to thereby control the fission process in the fuel assembly 10 (Fig. 1), all in a well-known manner. With the exception of the exemplary control rod assembly which comprises an advanced control rod design, which will be discussed below, all of the foregoing is old and generally well-known in the art. The following preferred embodiment of this invention will be shown and described as applied to a normal shut down control rod assembly, though it should be appreciated that the invention may be applied as well to other control rod assemblies, such as gray rod control assemblies. Thus as used herein the term "control rod" is intended to encompass gray rods as well.

### Advanced Rod Control Assembly

A nuclear control rod assembly is presented that has an extended life. As previously stated, state of the art neutron absorbers are made from solid or hollow silver-indium-cadmium (AIC) bars enclosed in thin-walled steel cladding. AIC is relatively soft or malleable compared to stainless steel or high nickel alloys used for the cladding. Under radiation, the AIC swells. A radial gap and/or hole is generally provided to accept the swelling. However, inertial loads due to the cyclic stepping action of the rod cluster control assembly drive mechanism can produce "mushrooming" of the bottom of the AIC column, which could consume the space initially provided to accommodate swelling. Mushrooming and swelling are most pronounced at the control rod tip, i.e., the bottom region of the control rod. That is because of the weight of the 10-12 ft. AIC stack weighing down on this region and the fact that this region is under intense irradiation, even when the control rods are fully withdrawn from the core because of its proximity to the fuel assemblies. As a result of mushrooming and swelling, the cladding surrounding this lower region can become strained to the point of cracking, particularly because irradiation embrittlement at the tip of the cladding is most severe.

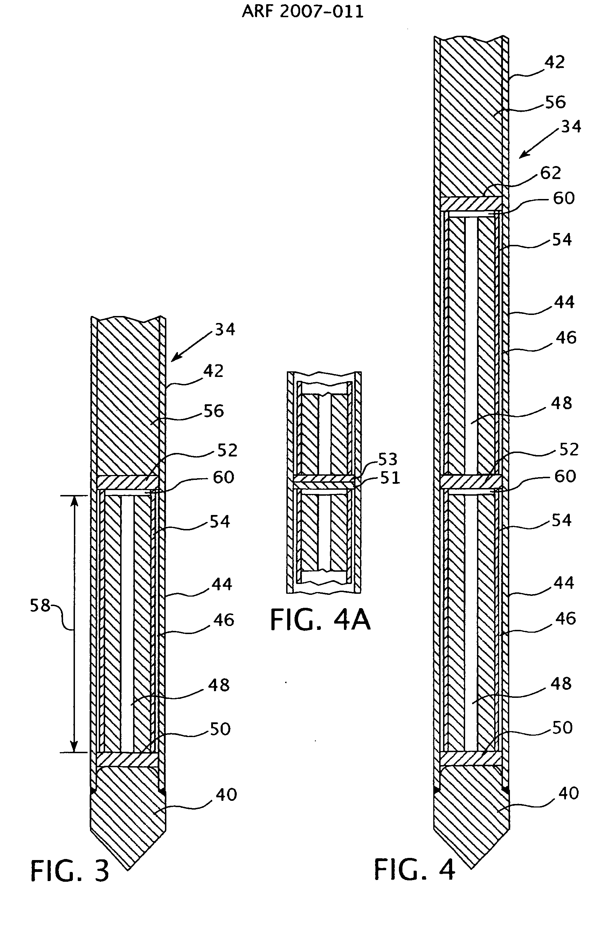

This invention provides an improved absorber tip arrangement that will allow the cladding to operate safely over an extended life, i.e., maintain strain within the elastic region. One embodiment of the invention is shown in Fig. 3. The invention employs the standard thin steel cladding 42 that is welded at its lower end to the lower end cap 40. The lower interior region 58 which may extend from approximately 12-20 inches (3.48 - 50.8cm) is filled with an annular AIC absorber that has a closely-fitting thin metal sleeve 54 surrounding and spaced from the cladding 42. The central void area 48 and the annular void area 46 adjacent the cladding 42 are sized to accommodate swelling under irradiation. The lower AIC neutron absorber 44 can be formed as a single member or stacked in pellets and extends from a lower spacer 50 axially toward the other end of the metal sleeve 54, stopping short of the upper end of the sleeve to leave a gap 60 to accommodate axial growth. The metal sleeve 54 rests on the lower spacer 50 and is capped by an upper spacer 52. Preferably the spacers may be mechanically attached to the sleeve or otherwise held in position to maintain the proper orientation. The standard AIC neutron absorber 56 extends from the spacer 52 axially up to the upper gas plenum (not shown). The standard neutron absorber 56 is a solid slug of AIC and is supported by the upper spacer 52. The primary function of the sleeve 54, spacers 50 and 52 and gap 60 is to isolate the tip absorber 44 from the inertial stepping loads that result from the 12-14 ft. (3.66-4.27m) long absorber stack 56, above. The load is carried axially into the bottom end plug and distributed over the end plug by the spacer 50, thereby bypassing the absorber tip 44 and preventing mushrooming. The sleeve 54 can be constructed out of metal such as 300 series stainless steel, or a nickel alloy such as Inconel Alloy 718, for example, and desirably, is approximately 0.008 inches (.02cm) thick. The sleeve is designed to mechanically transmit the load and is prevented from distortion in part by virtue of being co-extruded with the AIC or by close fit with the AIC 44.

Since the bottom absorber 44 is isolated from stepping loads, the potential for mushrooming is eliminated and the center hole or void 48 remains available for accommodating swelling. Early in life, the tendency will be for the AIC to swell radially outward in the direction of least resistance and in so doing may push out the thin sleeve through a small gap 46 until contact with the cladding 42 is made. The sleeve does not have to be particularly strong in the hoop direction. Following contact with the sleeve 46 with the cladding 42, continued swelling of the AIC is accommodated by creep of the AIC into its central void 48. A finite element model using typical control rod proportions shows that the cladding overcomes the low creep strength of the hollow AIC such that the AIC will creep into the central void 48 as long as the void remains available. During this process the strain in the cladding remains in the elastic range. The void 48 or other shaped void can be sized to accommodate the volumetric expansion associated with the desired life fluence of the control rod. Also, the void 48 size can be selected to reach end of life with a significant percentage of the void still open.

Fig. 4 shows another embodiment of this invention, particularly suited to control rods that experience frequent partial insertion into the core, that interposes another layer of the AIC absorber 44 wrapped in an outer sleeve of thin metal 54 on top of the spacer 52 and adds an additional spacer 62 on top of the second tandem thin metal sleeve 54 to support the standard AIC absorber 56. Alternately, as shown in Fig. 4A, the spacer 52 can be comprised of two pieces, one piece 51 mechanically attached to the bottom sleeve 54 and a second piece 53 mechanically attached to the upper sleeve 54 to keep the sleeves and spacers in proper orientation and facilitate loading during manufacture. The total length of the tandem arrangement of sleeves 54 is between approximately 12-40 inches (30.48-101.6 cm).

Therefore, threats to the control rod cladding integrity from a combination of mushrooming and swelling of the AIC absorber are mitigated by the design enhancements of this invention, which translates into a long design life for the control rod cladding.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims and any and all equivalents thereof.

## Claims

1. A control rod comprising:
an elongated tubular cladding having an axial dimension with a first end at one extent of the axial dimension and a second end at another extent of the axial dimension, the tubular cladding having an outside dimension sized to fit within a narrowest dimension of a hollow interior of a control rod guide thimble of a nuclear fuel assembly;
a lower end plug closing off the first end of the elongated tubular cladding and designed to be slidably received within the control rod guide thimble;
an upper end plug closing off the second end of the elongated tubular cladding;
a first sleeve received within a lower portion of the elongated tubular cladding extending axially from the lower end plug a first distance;
a first spacer interposed between the first sleeve and the lower end plug so that a lower end of the first sleeve rests on the spacer;
a first extent of neutron absorbing material positioned within the elongated tubular cladding and extending axially from the first spacer towards an upper end of the first sleeve and stopping short of the upper end of the first sleeve;
a second spacer resting on a top of the upper end of the first sleeve and capping a void space between the first extent of neutron absorbing material and the second spacer; and
a second extent of neutron absorbing material positioned within the elongated tubular cladding and extending axially from the second spacer towards the upper end plug and stopping short of the upper end plug.

2. The control rod of Claim 1 wherein the first spacer is a substantially solid disk.

3. The control rod of Claim 1 or 2 wherein the first extent of neutron absorbing material is annular with a central void region sized to absorb irradiation growth.

4. The control rod of Claim 3 wherein the second extent of neutron absorbing material is a solid pellet or rod with substantially no void region therein.

5. The control rod of any of Claims 1 to 4 wherein the first extent of neutron absorbing material has an outside diameter that is smaller than an inside diameter of the first sleeve and defines a void space there between sized to accommodate irradiation growth.

6. The control rod of any of Claims 1 to 5 wherein the first sleeve has an outside diameter that is smaller than an inside diameter of the elongated tubular cladding and defines a void space there between sized to accommodate irradiation growth.

7. The control rod of Claim 6 wherein the first extent of neutron absorbing material is closely received within the first sleeve.

8. The control rod of any of Claims 1 to 7 further comprising:
a second sleeve received within the lower portion on the elongated tubular cladding on a top of the second spacer, extending axially from the second spacer a second distance;
a third extent of neutron absorbing material positioned within the elongated tubular cladding and extending axially from the second spacer towards an upper end of the second sleeve and stopping short of the upper end of the second sleeve; and
a third spacer resting on a top of the upper end of the second sleeve and capping a second void space between the third extent of neutron absorbing material and the third spacer, the third spacer being interposed between the second sleeve and the second extent of neutron absorbing material.

9. The control rod of any of Claims 1 to 8 wherein the first sleeve is between approximately 1 ft. and 2 ft. (.3048 m and .6096 m) long.

10. A control rod assembly having a plurality of control rods including at least one control rod according to any of claims 1 to 9.
an elongated tubular cladding having an axial dimension with a first end at one extent of the axial dimension and a second end at another extent of the axial dimension, the tubular cladding having an outside dimension sized to fit within a narrowest dimension of a hollow interior of a control rod guide thimble of a nuclear fuel assembly;
a lower end plug closing off the first end of the elongated tubular cladding and designed to be slidably received within the control rod guide thimble;
an upper end plug closing off the second end of the elongated tubular cladding;
a first sleeve received within a lower portion of the elongated tubular cladding extending axially from the lower end plug a first distance;
a first spacer interposed between the first sleeve and the lower end plug so that a lower end of the first sleeve rests on the spacer;
a first extent of neutron absorbing material positioned within the elongated tubular cladding and extending axially from the first spacer towards an upper end of the first sleeve and stopping short of the upper end of the first sleeve;
a second spacer resting on a top of the upper end of the first sleeve and capping a void space between the first extent of neutron absorbing material and the second spacer; and
a second extent of neutron absorbing material positioned within the elongated tubular cladding and extending axially from the second spacer towards the upper end plug and stopping short of the upper end plug.
